# EUROPÄISCHE PATENTSCHRIFT

(11) **EP 3 233 229 B1**
(45) Veröffentlichungstag und Bekanntmachung des Hinweises auf die Patenterteilung: **28.08.2019**
(21) Anmeldenummer: 15813027.8
(22) Anmeldetag: 15.12.2015
(51) Int. Cl.: C02F 1/34, C02F 1/36, C02F 1/04, B05B 17/06, C02F 101/30, C02F 101/36, C02F 103/16, C02F 103/06, C02F 103/00

(54) **GEWERBEWASSERAUFBEREITUNGSVERFAHREN**
METHOD FOR INDUSTRIAL WATER TREATMENT
PROCÉDÉ DE TRAITEMENT D'EAUX INDUSTRIELLES

(30) Priorität: 19.12.2014 DE 102014119238
(43) Veröffentlichungstag der Anmeldung: 25.10.2017
(73) Patentinhaber: Bergische Universität Wuppertal, 42119 Wuppertal (DE)
(72) Erfinder: EBERSBACH, Ina, 58332 Schwelm (DE); KLING, Hans-Willi, 42277 Wuppertal (DE); DUDZINSKI, Andreas, 32657 Lemgo (DE); CONSTAPEL, Marc, 42389 Wuppertal (DE); MARZINKOWSKI, Joachim Michael, 40221 Düsseldorf (DE)
(74) Vertreter: Michalski Hüttermann & Partner Patentanwälte mbB
(86) Internationale Anmeldenummer: PCT/EP2015/079842
(87) Internationale Veröffentlichungsnummer: WO 2016/096885

(56) Entgegenhaltungen:
- EP-A2- 0 250 394
- DE-A1- 4 113 813
- FR-A1- 3 003 856
- US-A1- 2005 016 380

## Beschreibung

Die vorliegende Erfindung betrifft ein Gewerbewasseraufbereitungsverfahren zum Abtrennen von fluorhaltigen Tensiden aus einer wässrigen Lösung, nämlich aus einem Gewerbewasser. Die vorliegende Erfindung betrifft insbesondere ein Verfahren zum Behandeln von Prozessabwässern, wie etwa von galvanochemischen Prozessen, insbesondere aufweisend Per- und/oder Polyfluorierte Tenside (PFT).

Per- und/oder Polyfluortenside (PFT) werden heutzutage in verschiedenen Prozessen verwendet. Derartige fluorhaltige Verbindungen werden beispielsweise in der galvanischen Industrie eingesetzt und können beispielsweise bei einem Verchromungsprozess Cr(VI)-haltige Aerosole zurückhalten und somit dem Arbeitsschutz dienen. Ferner bieten diese etwa den Vorteil, dass sie in Chromierungsbädern aufgrund ihrer vorteilhaften Benetzungseigenschaften Werkstücke benetzen können und ferner, dass sie verhindern können, dass sich Schlamm durch Abbauprodukte in den Bädern bildet. Vorteile bieten diese Verbindungen ferner durch ihre chemische Stabilität.

Nachteilig an der Verwendung von Perfluortensiden ist es indes, dass diese auf Mensch und Umwelt negative Auswirkungen hervorrufen können, wenn diese beispielsweise durch Prozesswässer oder durch Abwässer in die Umwelt, beispielsweise in das Grundwasser, gelangen. Derartige Substanzen sind persistent, zum Teil bioakkumulativ und toxisch und werden daher in Abwässern als sehr kritisch betrachtet. Nachteilig ist dabei insbesondere, dass PFT-Stoffe in Kläranlagen nicht abgebaut werden sondern in Oberflächengewässern und im Klärschlamm wiedergefunden werden.

Daher ist es von großer Wichtigkeit, Per- und/oder Polyfluorierte Tenside (PFT) aus Rohwasser, etwa zur Trinkwasserherstellung, oder aus Abwässern zu eliminieren beziehungsweise deren Konzentration zumindest auf einen unschädlichen Wert zu senken. Als Grenzwert für die Konzentration an Perfluortensiden in Wässern kann beispielsweise und nicht beschränkend eine Konzentration von 1µg/L als Summe aller Perfluortenside genannt werden.

Verschiedene Dokumente, wie etwa McMurdo et al: "Aerosol Enrichment of the Surfactant PFO and Mediation of the Water-Air Transport of Gaseous PFOA", Environ. Sci. Technol. 2008, 42, 3969-3974, Giovannelli et al: "Evidence of Anionic-surfactant Enrichment in Marine Aerosol", Marine Pollution Bulletin, Vol. 19, No. 6, 274-277, 1988, Latif et al: "Surfactants in Atmospheric Aerosols", Environ. Sci. Technol. 2004, 38, 6501-6506, Skop et al: "Radiotracer studies of surfactant transport to the sea-air interface by submillimeter-size bubbles", Experiments in Fluids, 10 251-256 (1991), beschreiben zusammenfassend den Effekt der Ansammlung von Tensiden in einem Aerosol. Diese Dokumente beziehen sich jedoch ausschließlich auf natürlich vorkommende Effekte, etwa bei einer Wellenbildung von Ozeanwasser. Eine Ausnutzung dieses Effekts für eine konkrete Anwendung wird von diesen Dokumenten nicht nahegelegt.

Insoweit konkrete Anwendungen Gegenstand des Stands der Technik sind, werden heutzutage Perfluortenside aus Abwässern oftmals ausgetragen beziehungsweise eliminiert durch die Verwendung von Aktivkohle oder Ionenaustauschern. Die verwendeten Adsorbentien sind nach einer Abtrennung mit PFT kontaminiert und können nur mit erheblichem Aufwand wieder regeneriert werden. Bei der Regenerierung findet sowohl eine Anreicherung der PFT als auch eine Erhöhung der Salzfracht statt. Die hohe Salzkonzentration verhindert den direkten Einsatz des Konzentrats als Regenerat im Verchromungselektrolyten und macht eine weitgehende aufwendige Behandlung der Konzentrate erforderlich. Ein weiterer Nachteil der Verfahren besteht darin, dass kurzkettige PFTs, wie etwa Perfluorbutansulfonsäure, nur unzureichend zurückgehalten werden.

Ferner ist es etwa aus Stickel et al: "Reinigung Tensid-haltiger Abwässer durch Schaumtrennung" Chem.-Ing.-Techn. 44.Jahrg, 1972, Nr. 5, 341 bekannt, ein sogenanntes Schaumtrennverfahren anzuwenden.

Diesbezüglich ist es aus dem Dokument CN 10171646 ferner bekannt, eine verdünnte Lösung von Tensiden zu behandeln. Hierzu wird eine vertikale Membran zum Eintragen von Blasen in eine Flüssigkeit verwendet, wodurch die Anreicherung in einem so geformten Schaum verbessert werden soll.

Die Anreicherung von fluorhaltigen Tensiden, wie etwa von Per- und/oder Polyfluortensiden (PFT), in dem Schaum wird in diesem Dokument jedoch nicht erwähnt. Darüber hinaus bieten Schaumtrennverfahren noch weiteres Potential zur Verbesserung, insbesondere bezüglich der Austragsraten, der Wiederverwendung der abgetrennten Substanzen sowie mit Bezug auf den Wasseraustrag bei einem Austragen der Tenside.

DE 41 13 813 A1 beschreibt ein Verfahren zum Reinigen eines Abwassers aus einem Druckereiprozess. Durch dieses Verfahren sollen beispielsweise flüchtige Bestandteile, wie etwa Tenside, aus dem Abwasser entfernt werden. Um die Tenside zu entfernen ist gemäß dem in Dl beschriebenen Verfahren vorgesehen, dass diese Bestandteile durch das Einblasen von Luft als Desorptionsmittel gestrippt beziehungsweise desorbiert werden.

EP 0 250 394 A2 beschreibt ebenfalls ein Verfahren zum Reinigen von Abwässern, etwa aus einem Druckereibetrieb. Bei diesem Verfahren wird offenbart, dass Tenside aus dem Abwasser entfernt werden, indem zuvor filtriertes Abwasser unter Verwendung von Luft als Desorptionsmittel behandelt wird. Dabei ist es vorgesehen, dass Luft als Desorptionsmittel in das Abwasser eingeleitet wird, um das Desorptionsmittel dispers beziehungsweise in Blasenform mit dem Abwasser in Kontakt gebracht wird. Es ist ferner offenbart, dass ein Abwasser, das mit Tensiden verunreinigt ist, bei der Desorption zur Schaumbildung neigen kann, so dass es vorteilhaft ist, ein Entschäumungsmittel zuzugeben.

Es ist daher die Aufgabe der vorliegenden Erfindung, ein Verfahren zum Abtrennen von fluorhaltigen Tensiden aus wässrigen Lösungen zu schaffen, welches eine hohe Effizienz aufweist.

Die Lösung der Aufgabe erfolgt erfindungsgemäß durch ein Verfahren mit den Merkmalen des Anspruchs 1. Bevorzugte Ausgestaltungen der Erfindung sind in den Unteransprüchen, in der Beschreibung und den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Es wird ein Gewerbewasseraufbereitungsverfahren vorgeschlagen. Ein derartiges Verfahren umfasst die Verfahrensschritte:
a) Bereitstellen des Gewerbewassers mit wenigstens einem fluorhaltigen Tensid, wobei das fluorhaltige Tensid eine Konzentration aufweist, die unterhalb einer Schaumbildungskonzentration liegt;
b) Erzeugen von Gasblasen in dem Gewerbewasser unter Ausbildung eines Aerosols an der Oberfläche des Gewerbewassers; und
c) Abtrennen des Aerosols von dem Gewerbewasser.

Durch ein vorbeschriebenes Verfahren kann es auf einfache Weise ermöglicht werden, dass fluorhaltige Tenside aus einem Gewerbewasser entfernt beziehungsweise abgetrennt werden und das Gewerbewasser somit gereinigt wird. Somit kann die Einhaltung gewünschter Grenzwerte für die fluorhaltigen Tenside sichergestellt werden.

Somit dient das vorbeschrieben Verfahren insbesondere dem Abtrennen von fluorhaltigen Tensiden aus einem Gewerbewasser. Unter einem Gewerbewasser kann dabei insbesondere eine wässrige Lösung verstanden werden, welche zumindest teilweise Wasser umfasst und welche einem gewerblichen Prozess, beispielsweise einem industriellen Prozess, zugeführt oder von diesem abgeführt werden kann oder mit welchem selbst ein gewerblicher Prozess durchgeführt werden kann. Somit ist ein Gewerbewasser beispielsweise ein Prozesswasser oder ein Prozessabwasser beispielsweise der Prozessindustrie. Beispielhaft für derartige gewerbliche Prozesse, bei denen das vorbeschriebene Verfahren Anwendung findet, sind beispielsweise chemische Prozesse oder Wasseraufbereitungsprozesse, wie etwa für die Grundwasseraufbereitung. Dabei wird im weiteren für das Gewerbewasser auch allgemein von einer wässrigen Lösung gesprochen, ohne dass jedes Mal gesondert auf das Vorliegen des Gewerbewassers hingewiesen wird.

Als Beispiel für ein Gewerbewasser wird nicht beschränkend ein Abwasser der Galvanochemie genannt, da beispielsweise galvanochemische Prozesse oftmals mit derartigen Tensiden arbeiten.

Ein weiteres Beispiel für ein Gewerbewasser kann beispielsweise Löschwasser sein. Denn insbesondere bei Löschwassern beziehungsweise bei einem Löschvorgang als gewerblichem Vorgang beispielsweise aufgrund des verwendeten Löschschaums entstehenden Abwässern wurde gefunden, dass diese fluorhaltige Tenside enthalten können. Auch bei diesen Wässern ist es daher vorteilhaft, diese von fluorhaltigen Tensiden zu befreien.

Weiterhin kann grundsätzlich auch Grundwasser als Gewerbewasser im Sinne der Erfindung dienen. Denn Grundwasser ist zum einen ein Wasser, welches gemäß der vorstehenden Definition einem gewerblichen Prozess zuführbar ist. Darüber hinaus weist Grundwasser oftmals Bestandteile auf, die durch das Einleiten von Prozessabwässern trotz einer Aufreinigung dieser in das Grundwasser gelangen. Somit ist Grundwasser im Sinne der vorliegenden Erfindung zumindest teilweise als behandeltes und verdünntes Prozessabwasser zu sehen. Dem Vorstehenden folgend sind auch im Grundwasser fluorhaltige Tenside beispielsweise aus industriellen Prozessen vorhanden, welche durch das vorbeschriebene Verfahren entfernt werden können.

Ferner können unter fluorhaltigen Tensiden insbesondere derartige oberflächenaktive Substanzen verstanden werden, welche wenigstens ein Fluoratom in ihrer Molekülstruktur aufweisen.

Um die fluorhaltigen Tenside aus der wässrigen Lösung abzutrennen, also aus dieser zu entfernen, umfasst das vorbeschriebene Verfahren zunächst gemäß Verfahrensschritt a) das Bereitstellen des Gewerbewassers, welches wenigstens ein fluorhaltiges Tensid aufweist. Dabei kann die fluorhaltige wässrige Lösung beziehungsweise das Gewerbewasser grundsätzlich jegliche weitere Bestandteile aufweisen, ohne den Rahmen der vorliegenden Erfindung zu verlassen. Dabei ist es jedoch von Wichtigkeit, dass das fluorhaltige Tensid eine Konzentration aufweist, die unterhalb einer Schaumbildungskonzentration, also einer Konzentration, ab der eine Schaumbildung einsetzt, liegt. Dies soll im Rahmen der vorliegenden Erfindung insbesondere bedeuten, dass das fluorhaltige Tensid eine Konzentration aufweist derart, dass bei den weiteren Verfahrensschritten, wie diese nachfolgend im Detail beschrieben sind, ein Aerosol geformt wird, eine Schaumbildung jedoch vermieden wird. Das beschriebene Verfahren basiert somit gerade nicht auf einer Schaumbildung sondern eine Schaumbildung soll vielmehr vermieden werden. Dabei kann die Schaumbildungskonzentration abhängig sein von dem jeweiligen auszutragenden beziehungsweise zu eliminierenden fluorierten Tensid sowie von weiteren Bestandteilen der wässrigen Lösung. Jedoch kann die Schaumbildungskonzentration auch bei verschiedensten Bestandteilen der wässrigen Lösung für den Fachmann problemlos ermittelbar sein, wie dies nachstehend im Detail beschrieben ist.

Beispielsweise kann das fluorhaltige Tensid ein Per- oder Polyfluoriertes Tensid (PFT) oder Tensid sein. Beispiele für derartige Tenside umfassen die perfluorierten Alkylsulfonate (PFAS), wie beispielsweise Perfluoroctansulfonat (PFOS), Perfluorbutansulfonsäure (PFBS) oder auch das Fluorotelomer-Sulfonat (6:2FTS), oder die perfluorierten Carbonsäuren (PFCA), wie etwa Perfluoroctansäure (PFOA). Derartige Tenside finden insbesondere in galvanochemischen Prozessen Anwendung und können daher in verschiedenen Konzentrationen in der wässrigen Lösung beziehungsweise dem Gewerbewasser enthalten sein.

Insbesondere für derartige Tenside ist es bekannt, dass diese aufgrund ihrer schädlichen Wirkung aus Gewerbewässern entfernt werden sollten. Um dies zu realisieren, umfasst das vorbeschriebene Verfahren unter dem weiteren Verfahrensschritt b) das Erzeugen von Gasblasen in dem Gewerbewasser unter Ausbildung eines Aerosols an der Oberfläche der wässrigen Lösung. Dabei können die Gasblasen in der wässrigen Lösung grundsätzlich frei wählbar erzeugt werden, wobei bevorzugte Beispiele nachfolgend beschrieben sind. Dabei kann es insbesondere zum Ausbilden des Aerosols bevorzugt sein, wenn die erzeugten Gasblasen einen vergleichsweise geringen Durchmesser aufweisen, wie etwa in einem Bereich von 2mm oder auch darunter, wie beispielsweise in einem Bereich von ≤ 1mm. Es kann ferner das Erzeugen von sogenannten Jet Drops im Aerosol bevorzugt sein, so dass die Gasblasen entsprechend angepasst werden können.

Bei dem Erzeugen von Gasblasen sollte an der Oberfläche der wässrigen Lösung, also insbesondere an der Phasengrenze zwischen der Lösung und der darüber befindlichen Atmosphäre, insbesondere Luft, beziehungsweise oberhalb der Flüssigkeit des Gewerbewassers, ein Aerosol erzeugt werden. Dies kann insbesondere dadurch entstehen, dass die Gasblasen an der Oberfläche der wässrigen Lösung kollabieren und dadurch ein Aerosol erzeugen. Unter einem Aerosol ist dabei in Abgrenzung zu einem Schaum insbesondere zu verstehen ein Gemisch beziehungsweise eine Dispersion aufweisend flüssige frei bewegliche Teilchen, insbesondere Schwebeteilchen, in einem Gas, wohingegen im Gegensatz zu einem Aerosol unter einem Schaum zu verstehen ist eine Mehrzahl an gasförmigen Bläschen, die von einer Flüssigkeit begrenzt sind.

Dabei kann eine Aerosolbildung insbesondere sichergestellt werden durch das Einhalten beziehungsweise Einstellen der Konzentration des Tensids, welche sich unter einem vorbestimmten Grenzwert, der Schaumbildungskonzentration, befinden sollte. Beispielhafte und in keiner Weise beschränkende Schaumbildungskonzentrationen liegen dabei bei 13mg/l für 6:2FTS und bei 5mg/l für PFOS. Diese Werte beziehen sich jeweils auf eine 0,2 molare Schwefelsäurelösung, in welcher das entsprechende Tensid gelöst ist. Die Gasblasen wurden erzeugt unter Verwendung einer Fritte mit einem Durchmesser von 5cm und einer Porengröße in einem Bereich von 16-40µm, wobei ein Gasfluss von 60ml/min verwendet wurde.

Die Konzentration kann etwa durch Verdünnung mit Wasser angepasst werden. Die Konzentration kann dabei für die entsprechende wässrige Lösung beispielsweise ermittelbar sein, indem Gasblasen erzeugt werden, wie dies nachfolgend beschrieben wird, und indem ermittelt wird, ob eine Schaumbildung oder eine Aerosolbildung eintritt. Bei dem Eintreten einer Schaumbildung kann die wässrige Lösung weiter verdünnt werden, bis kein Schaum entsteht. Die entsprechende Grenze entspricht der Schaumbildungskonzentration des entsprechenden Tensids in der wässrigen Lösung. Somit soll bei dem vorbeschriebenen Verfahren gerade kein Schaum gebildet werden, sondern das Verfahren basiert gerade auf einer Aerosolbildung und hebt sich somit signifikant von bekannten Schaumtrennverfahren ab.

Um auch höher konzentrierte Tensidlösungen des Gewerbewassers zu verwenden beziehungsweise zu behandeln kann es vorteilhaft sein, dass das Gewerbewasser einen Entschäumer aufweist. Durch die Verwendung eines Entschäumers kann die Schaumbildungskonzentration erhöht werden, so dass unter Umständen auf ein Verdünnen verzichtet werden kann. Dabei kann unter einem Entschäumer in derartiges Mittel verstanden werden, welches eine Schaumbildung reduzieren und/oder bereits gebildete Schäume zerstören kann. Beispielhafte Entschäumer umfassen in nicht beschränkender Weise Kieselsäure oder Phosphorsäureester.

Es können als Gasblasen grundsätzlich jegliche Gase verwendet werden. Jedoch kann es beispielsweise aufgrund der Kostengünstigkeit und der guten Verfügbarkeit bevorzugt sein, dass als Gasblasen Luftblasen erzeugt werden, wie dies nachstehend im Detail erläutert wird. Jedoch kann je nach Erzeugung der Gasblasen es gleichermaßen geeignet sein, dass als Gasblasen Sauerstoffblasen, Wasserstoffblasen oder Gasblasen weiterer Gase erzeugt werden, ohne den Rahmen der Erfindung zu verlassen.

Weiterhin umfasst das Verfahren gemäß Verfahrensschritt c) das Abtrennen des Aerosols von dem unterstehenden Gewerbewasser beziehungsweise von dem Gasraum unmittelbar darüber. Dadurch kann insbesondere verhindert werden, dass die Flüssigkeitstropfen des Aerosols sich wieder mit der Ursprungslösung vereinen und die Tenside dadurch wieder in die Lösung zurück gelangen.

Das vorbeschriebene Verfahren nutzt zur Abtrennung der fluorhaltigen Tenside aus der wässrigen Lösung insbesondere aus, dass sich die fluorhaltigen Tenside bevorzugt in dem Aerosol sammeln beziehungsweise dort anreichern. Dadurch können die Tenside zusammen mit dem Aerosol aus der Flüssigkeit ausgetragen werden, wodurch die wässrige Lösung von den fluorhaltigen Tensiden gereinigt werden kann.

Dabei kann eine Abtrennung von insbesondere fluorhaltigen Tensiden unter Verwendung eines Aerosols, wie dies vorstehend erläutert ist, eine verglichen etwa mit einer Schaumabtrennung deutlich verbesserte Austragrate der Tenside aus der wässrigen Lösung ermöglichen. Dadurch ist es möglich, momentane oder zukünftige Grenzwerte von fluorhaltigen Tensiden, insbesondere von PFT, in Wässern von 5 µg/L oder sogar darunter, wie etwa von 1 µg/L, zu erreichen. Dazu kann es bevorzugt sein, das vorbeschriebene Verfahren, insbesondere das Erzeugen und Abtrennen des Aerosols, oder auch nur das Erzeugen des Aerosols gemäß Verfahrensschritt b), mehrfach hinter einander durchzuführen.

Ferner ermöglicht das vorbeschriebene Verfahren besonders geringe Austragsraten von Wasser der wässrigen Lösung bei einer Abtrennung der Tenside. Beispielhaft kann die Austragrate in einem Bereich von 1-5% Wasser, bezogen auf die Gesamtmenge an Wasser in der wässrigen Lösung, pro Stunde liegen. Der Wasseraustrag kann dabei abhängig sein von der Art der Erzeugung der Gasblasen, wie etwa der Dauer des Verfahrens, der Stärke des Gasflusses, und der Temperatur der Lösung.

Darüber hinaus kann das vorbeschriebene Verfahren neben seiner hohen Effektivität von einer beispielhaften Austragrate der Tenside von 99% oder sogar darüber eine besonders hohe Geschwindigkeit aufweisen, da die Halbwertszeit der Tenside in der Lösung im Bereich von wenigen Minuten liegen. Dadurch kann ein hoher Durchsatz erreicht werden, was die Wirtschaftlichkeit noch weiter verbessern kann.

Das Verfahren zeichnet sich ferner durch seine Einfachheit aus, da die Zugabe von besonderen Chemikalien nicht zwingend ist und ferner ein einfacher Aufbau ausreicht. Darüber hinaus sind selbst hohe Salzkonzentrationen in der wässrigen Lösung als weitere Bestandteile neben dem Tensid oder den Tensiden nicht schädlich, was für viele Anwendungen ebenfalls von großem Vorteil sein kann, wobei eine gewisse Salzkonzentration aufgrund der dann vorhandenen Ionenstärke sogar von Vorteil sein kann. Somit kann auf eine Aufreinigung beispielsweise von Prozessabwässern der galvanischen Industrie verzichtet werden beziehungsweise kann es ermöglicht werden, Prozesswässer beziehungsweise Abwässer ohne weitere Vorbehandlung dem vorbeschriebenen Verfahren zu unterwerfen.

Somit ist es vorteilhaft, dass bei einem vorbeschriebenen Verfahren ionische Substanzen, die beispielsweise in galvanischen Prozessen als Elektrolyte oder andere Substanzen vorkommen können, nicht schädlich sind, sondern das Austragen der fluorhaltigen Tenside sogar verbessern können. Beispielsweise kann es von Vorteil sein, wenn Schwefelsäure oder Salze in der wässrigen Lösung vorliegen, da diese einen Austrag der fluorhaltigen Tenside besonders effektiv machen können. Daher kann es vorgesehen sein, wenn beispielsweise keine Säure oder keine Salze in der wässrigen Lösung vorliegen, beispielsweise wenn die fluorhaltigen Tenside nicht aus wässrigen Lösungen eines galvanischen Prozesses entfernt werden, dass diese der wässrigen Lösung zugesetzt werden. Insbesondere kann es durch diese Stoffe ermöglicht werden, dass die Aerosolbildung verbessert werden kann und/oder die Effektivität beziehungsweise die Austragrate und/oder die Abtrenngeschwindigkeit verbessert werden können im Vergleich zu einer wässrigen Lösung, bei der diese Stoffe nicht vorhanden sind. Geeignete Säuren umfassen beispielsweise Schwefelsäure, wobei die Säure etwa in einer beispielhaften Konzentration von 0,2M vorliegen kann. Alternativ kann es vorteilhaft sein, dass Salze zugegen sind, wie beispielsweise Natriumchlorid oder Natriumsulfat, wobei durch die Salze insbesondere die Austraggeschwindigkeit erhöht werden kann und wobei die Salze in einer Konzentration von 0,05molar oder darüber, beispielsweise 0,2molar oder darüber, vorliegen können. Somit brauchen derartige Stoffe etwa aus galvanischen Abwässern nicht entfernt zu werden, sondern können vielmehr hilfreich sein. Die Konzentration kann dabei gewählt werden in Abhängigkeit des gewünschten Anwendungsgebiets.

Vorteilhaft bei dem vorbeschriebenen Verfahren ist es ferner, dass bei einer Konzentration des entsprechenden Tensids unterhalb einer Schaumbildungskonzentration gearbeitet wird. Denn wenn beispielsweise ein Schaum zum Abtrennen der Tenside verwendet würde, sollte die Konzentration der Tenside vergleichsweise höher sein, was unter Umständen ein Aufkonzentrieren notwendig machen kann. Demgegenüber liegt die Konzentration für eine Aerosolbildung vergleichsweise niedriger, so dass, um unterhalb der Schaumbildungskonzentration zu bleiben, gegebenenfalls ein Verdünnen durchgeführt werden kann, was jedoch verglichen mit einer Aufkonzentration deutlich einfacher durchführbar ist.

Ein weiterer Vorteil des vorbeschriebenen Verfahrens kann darin gesehen werden, dass eine Rückführung des Aerosols in einen Prozess deutlich einfacher sein kann, als bei herkömmlichen Verfahren. Dies kann darin begründet liegen, dass die Salzfracht in dem abgetrennten Aerosol vergleichsweise gering ist, so dass derartige gegebenenfalls störende Komponenten nicht vor einer Rückführung abgetrennt werden brauchen.

Zusammenfassend schafft das vorbeschriebene Verfahren somit eine leicht durchzuführende und kostengünstige Möglichkeit, auf besonders effektive Weise eine Abtrennung fluorhaltiger Tenside aus einer wässrigen Lösung als einem Gewerbewasser zu realisieren.

In einer bevorzugten Ausgestaltung des vorbeschriebenen Verfahrens kann es vorgesehen sein, dass Verfahrensschritt b) realisiert wird durch wenigstens eins von dem Einleiten eines Gases in das Gewerbewasser und dem Erzeugen eines Gases in dem Gewerbewasser und durch das Verwenden eines Gewerbewassers, das mit dem Gas zumindest temporär übersättigt ist. Insbesondere durch die vorbeschriebenen Verfahrensschritte kann es besonders bevorzugt realisierbar sein, dass sich durch das Erzeugen von Gasblasen in dem Gewerbewasser insbesondere bei dem Vorliegen des Tensids unterhalb einer Schaumbildungskonzentration unter Verhinderung einer Schaumbildung ein Aerosol ausbildet, durch welches das fluorhaltige Tensid oder die fluorhaltigen Tenside effektiv aus der wässrigen Lösung beziehungsweise aus dem Gewerbewasser ausgetragen werden können. Derartige Ausgestaltungen erlauben ferner auf besonders kontrollierbare und reproduzierbare Weise das Erzeugen von definierten Gasblasen, um so eine definierte und reproduzierbare Abtrennung des oder der fluorhaltigen Tenside zu ermöglichen.

Mit Bezug auf das Einleiten des Gases in das Gewerbewasser kann dies bevorzugt sein, da in dieser Ausgestaltung eine besonders gute Dosierbarkeit gegeben ist und somit besonders definierte Bedingungen erzielbar sein können. Diese Ausgestaltung kann dabei besonders bevorzugt realisiert werden unter Verwendung einer Fritte, wie etwa einer Glasfritte, welche etwa an einem Bodenbereich in die wässrige Lösung tauchen kann und das Gas an einem Bodenbereich auslassen kann. das Verwenden einer Fritte kann dabei gleichermaßen das Verwenden einer Mehrzahl von Fritten einschließen. Es können Fritten bevorzugt sein, welche eine vergleichsweise geringe Porengröße aufweisen, da auf diese Weise besonders effektiv ein Aerosol ausgebildet werden kann. Beispielhafte Porengrößen können etwa in einem Bereich von größer oder gleich 10 µm bis kleiner oder gleich 100µm sein. Dabei sind die vorbeschriebenen Porengrößen bevorzugt insbesondere mit Bezug auf die Geschwindigkeit des Austragens der Tenside, es ist jedoch vom Rahmen der Erfindung umfasst, gleichermaßen größere Porengrößen zu verwenden, da auch diese oftmals eine ausreichende Austragsrate ermöglichen können.

Diese Ausgestaltung kann ferner realisiert werden unter Verwendung einer Düse, was gleichermaßen das Verwenden einer Mehrzahl von Düsen einschließt. Die Art der Düse, wie insbesondere die Größe der Austrittsöffnung, wie auch der Druck des durch die Düse austretenden Gases kann dabei von dem gewünschten Anwendungsgebiet, wie etwa der Konzentration des Tensids oder der Art und der Bestandteile der Lösung beziehungsweise des Gewerbewassers, abhängen, wie dies für den Fachmann unmittelbar klar ist.

Mit Bezug auf das Erzeugen eines Gases in dem Gewerbewasser kann dies bevorzugt realisiert werden durch eine chemische Reaktion oder durch das Anwenden von Ultraschall. Bezüglich der Erzeugung von Gasblasen mittels Ultraschall kann beispielsweise und nicht beschränkend ein an sich bekannter Ultraschallvernebler oder eine piezoelektronische Vorrichtung verwendet werden. Bezüglich der piezoelektronischen Vorrichtung können beispielhaft entsprechend geformte Piezoscheiben als Ultraschallwandler dienen und eine beispielsweise mit einer Vielzahl an Löchern, beispielsweise mit mehreren tausend Löchern, versehene Edelstahlmembran zu Ultraschallschwingungen anregen. Die Schwingungen können bei 100 kHz oder darüber liegen. Dadurch können besonders homogene Aerosole erzeugt werden.

Bezüglich der chemischen Reaktion kann grundsätzlich jegliche chemische Reaktion geeignet sein, bei welcher ein Gas erzeugt wird. Rein beispielhaft und in keiner Weise beschränkend kann als chemische Reaktion eine Elektrolyse ablaufen. Dabei kann es in besonders einfacher Weise realisiert werden, dass die wässrige Lösung in eine Elektrolysevorrichtung eingeleitet wird, in welcher durch das Eintauchen von Elektroden in die wässrige Lösung zwischen den Elektroden eine Spannung angelegt wird, durch welche Wasser elektrolytisch zersetzt werden kann. Durch die Wasserelektrolyse entstehen in an sich bekannter Weise Sauerstoffblasen und Wasserstoffblasen, durch welche sich ein Aerosol zum Abtrennen der fluorhaltigen Tenside ausbilden kann. Dabei liegt die theoretische Zersetzungsspannung von Wasser bekanntermaßen bei 1,23V, so dass die angelegte Spannung oberhalb dieses Wertes liegen sollte, wobei als Elektrolyt etwa Schwefelsäure, beispielhaft in einem Bereich von 0,2Mol/Liter, dienen kann oder auch Salze, die in der wässrigen Lösung ohnehin vorhanden sein können. Jedoch kann es notwendig sein, dass die Spannung deutlich höher gewählt wird, da die benötigte Spannung aufgrund von Verlusten in der Elektrolysevorrichtung höher sein kann. Diese Differenz ist von mehreren Parametern abhängig, wie etwa von der Art und Beschaffenheit des Elektrodenmaterials, dem Elektrolyten und der Temperatur. Daher kann die eingestellte Spannung je nach vorliegenden Bedingungen gewählt werden und kann etwa bei 4V oder darüber, beispielsweise bei 6V oder darüber, liegen.

Es kann ferner vorgesehen sein, dass das Erzeugen eines Gases in dem Gewerbewasser realisiert wird durch das Anwenden eines statischen Mischers. Unter einem statischen Mischer kann dabei ein derartiger Mischer verstanden werden, der im Wesentlichen ohne bewegliche Teile unter Verwendung von Prallblechen arbeiten kann. Im Detail kann durch die Prallbleche erreicht werden, dass eine Mischwirkung durch eine Teilung von Produktvolumenströmen entsteht. Gleichermaßen wie eine Mischwirkung entsteht eine Verwirbelung des Wassers durch die Prallbleche, wodurch eine Aerosolbildung an der Oberfläche der Flüssigkeit entsteht. Die Vorteile eines statischen Mischers liegen beispielsweise in einer hohen Betriebsdauer und einem geringen Service, was insbesondere in dem Fehlen beweglicher Teile begründet sein kann. Darüber hinaus kann durch die geometrische Ausgestaltung, räumliche Anordnung sowie Anzahl der Prallbleche das Erzeugen eines Aerosols maßgeschneidert werden.

Mit Bezug auf das Verwenden eines Gewerbewassers, das mit dem Gas übersättigt ist, kann beispielsweise durch das Anwenden eines Überdrucks zusätzliches Gas in die wässrige Lösung eingebracht beziehungsweise in der Lösung zumindest temporär gelöst werden, wobei das Gas nach Entspannung wieder aus der Lösung beziehungsweise aus dem Gewerbewasser zum Erreichen eines Gleichgewichtszustands und unter Ausbildung von Gasblasen ausperlen kann. Somit bezieht sich die Übersättigung insbesondere auf die konkret vorherrschenden Bedingungen, wie etwa auf Normaldruck (1,01325 bar) und Raumtemperatur (22°C).

Insoweit das Erzeugen und Abtrennen des Aerosols, oder auch nur das Erzeugen des Aerosols gemäß Verfahrensschritt b) mehrfach hinter einander durchgeführt werden soll, kann das Gewerbewasser beispielsweise in einer Flüssigkeitsleitung geführt werden, welche eine Mehrzahl von entsprechenden Vorrichtung zum Erzeugen von Gasblasen in dem Gewerbewasser passieren, wie etwa eine Mehrzahl von Glasfritten oder eine Mehrzahl von Ultraschallverneblern. Dabei kann die Lösung für einen gewissen Zeitraum an den Vorrichtungen zum Erzeugen von Gasblasen verbleiben, also diskontinuierlich gefördert werden, oder kann ein mit einer geeigneten Geschwindigkeit durchgeführtes kontinuierliches Fördern ermöglicht werden.

In einer weiteren bevorzugten Ausgestaltung kann es vorgesehen sein, dass das bezüglich des fluorhaltigen Tensids angereicherte Aerosol aufgefangen wird. In anderen Worten kann das an der Oberfläche des Gewerbewassers erzeugte und mit Bezug auf das fluorhaltige Tensid angereicherte Aerosol an anderer Stelle wieder abgeschieden und gesammelt werden und braucht somit nicht verworfen zu werden, sondern kann gegebenenfalls den entsprechenden gewerblichen, beispielsweise industriellen, Prozessen, wie beispielsweise galvanischen Prozessen, wieder zugeführt werden. Darüber hinaus kann es verhindert werden, dass das Aerosol in die Raumluft gelangt. Für das Abscheiden des Aerosols kann beispielsweise ein an sich bekannter Tropfenabscheider beziehungsweise Demister verwendet werden. Die so erhaltenen wässrigen Tensid-Konzentrate können im Weiteren gegebenenfalls unmittelbar wieder genutzt werden, indem sie beispielsweise einem Prozess erneut zugeführt werden. Eine Rückgewinnung der Konzentrate beziehungsweise der aus der wässrigen Lösung entfernten Tenside ist dabei mit einem vergleichsweise geringen Aufwand problemlos möglich.

Insbesondere kann eine Rückgewinnung der abgetrennten Tenside deutlich einfacher sein, als beispielsweise unter Verwendung eines Schaumtrennverfahren, bei welchem der mit Tensiden angereicherte Schaum oftmals deutliche schwieriger rückzugewinnen ist. Somit kann sich das vorbeschriebene Verfahren insbesondere durch eine besonders gute Wirtschaftlichkeit auszeichnen.

In einer weiteren bevorzugten Ausgestaltung kann es vorgesehen sein, dass das Gewerbewasser aufweisend ein fluorhaltiges Tensid ein Prozesswasser oder ein Abwasser eines galvanischen Prozesses, ist. Alternativ oder zusätzlich kann es vorgesehen sein, dass das Gewerbewasser aufweisend ein fluorhaltiges Tensid ein Löschwasser oder ein Grundwasser ist. Das vorbeschriebene Verfahren kann insbesondere mit Bezug auf die Behandlung von Abwässern der Galvanochemie von Vorteil sein, da auch hohe Salzkonzentrationen, wie etwa an Chromaten, die Abtrennung der fluorhaltigen Tenside nicht oder nicht wesentlich beeinflussen, sondern im Gegensatz hierzu Chromspezies als Salze der Abtrennung der fluorhaltigen Tenside sogar zuträglich sein können, wie dies vorstehend im Detail beschrieben ist. Dies ist ein großer Vorteil gegenüber herkömmlichen Abtrennungsverfahren, wie etwa der Membrantechnologie oder der Verwendung von Ionenaustauschern, da diese bei derartigen Abwässern im Vergleich zu reinem Wasser eine teilweise deutlich reduzierte Effektivität aufweisen.

Dabei sind fluoridhaltige Tenside insbesondere in galvanischen Prozessen, wie etwa in industriellen Prozessen, von Vorteil, da diese Verbindungen sich bei derartigen Anwendungen neben dem Zurückhalten Cr(VI)-haltiger Aerosole, beispielsweise, in einem Verchromungsprozess insbesondere durch ihre guten Benetzungseigenschaften und ihre chemische Stabilität auszeichnen. Die vorgenannten Fluor-Verbindungen können dabei beispielsweise verhindern, dass sich bei Chromierungsbädern Schlamm durch Abbauprodukte in den Bädern bildet.

Weiterhin kann es besonders vorteilhaft sein, das vorbeschriebene Verfahren anzuwenden auf Grundwasser und Löschwasser, da auch diese Gewerbewasser oftmals fluorhaltige Tenside aufweisen können, die effektiv zu entfernen sind. Diesbezüglich kann insbesondere durch den Einsatz von Löschschäumen es nicht ausgeschlossen werden, dass fluorhaltige Tenside als Löschwasser anfallen und damit aus dem Löschwasser entfernt werden sollten. Darüber hinaus ist es bei jeglichen vorgenannten Prozessen oftmals nicht vollständig auszuschließen, dass fluorhaltige Tenside in das Grundwasser gelangen, so dass auch derartiges Gewerbewasser aufgereinigt werden sollte.

Somit betrifft die Erfindung ferner die Verwendung eines vorbeschriebenen Verfahrens zum Behandeln eines Prozesswassers oder eines Abwassers eines galvanischen Prozesses, insbesondere zum Reduzieren der Konzentration an fluorhaltigen Tensiden in dem Prozessabwasser, wie etwa von Poly- oder Perfluorierten Tensiden (PFT) .

Es kann ferner bevorzugt sein, dass das Gewerbewasser ein durch ein Extraktionsverfahren mit einem fluorhaltigen Tensid angereichertes Extraktionsmittel ist. In anderen Worten kann das Gewerbewasser derart erzeugt sein, dass eine wässrige Lösung als Lösungsmittel verwendet wird, um ein Tensid aus einem Extraktionsgut herauszulösen und somit das Tensid aufzunehmen oder in anderen Worten mit dem Tensid angereichert zu werden. Beispielsweise kann eine wässrige Lösung verwendet werden, um einen kontaminierten Boden, wie etwa kontaminiertes Erdreich, oder einen anderen beispielsweise festen Körper, von einem Tensid zu befreien. Beispielsweise kann ein Tenside aufweisender Bodenaushub mit einer wässrigen Lösung gespült werden, um so ein Tenside aufweisendes Gewerbewasser gemäß der vorliegenden Erfindung auszubilden. Dies kann beispielsweise von Vorteil sein, wenn beispielsweise aber nicht beschränkend nach einem Löschvorgang mit Tensiden kontaminiertes Erdreich dekontaminiert werden soll. Somit kann das Gewerbewasser gemäß der Erfindung erzeugbar sein durch Spülen beziehungsweise Aufreinigen von Erdreich.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, und wobei die Erfindung nicht auf die folgenden Zeichnungen und die folgende Beschreibung beschränkt ist.

Es zeigen:
Fig. 1 ein Diagramm zeigend den Austrag von 6:2 FTS aus einer wässrigen Lösung;
Fig. 2 ein Diagramm zeigend den Austrag von 6:2 FTS aus einem industriellen Abwasser;
Fig. 3 ein Diagramm zeigend den Austrag von 6:2 FTS aus einem weiteren industriellen Abwasser; und
Fig. 4 ein Diagramm zeigend den Austrag von 6:2 FTS aus einem weiteren industriellen Abwasser.

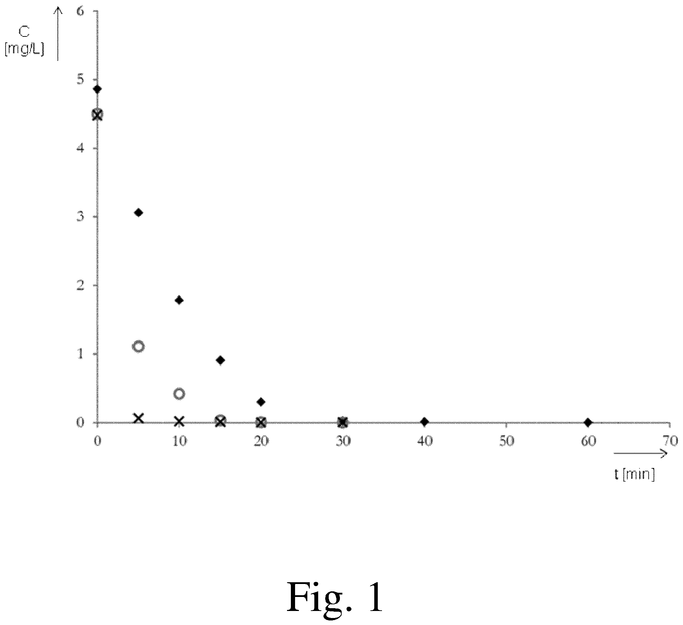

In den Figuren 1 bis 4 sind jeweils Diagramme gezeigt, welche den Erfolg jeweils einer Ausgestaltung eines erfindungsgemäßen Verfahrens zeigen. Das durchgeführte Verfahren dient dem Abtrennen von fluorhaltigen Tensiden aus einer wässrigen Lösung, wobei die wässrige Lösung insbesondere ein Gewerbewasser sein kann, und umfasst die Verfahrensschritte:
a) Bereitstellen der wässrigen Lösung mit wenigstens einem fluorhaltigen Tensid, wobei das fluorhaltige Tensid eine Konzentration aufweist, die unterhalb einer Schaumbildungskonzentration liegt;
b) Erzeugen von Gasblasen in der wässrigen Lösung unter Ausbildung eines Aerosols an der Oberfläche der wässrigen Lösung; und
c) Abtrennen des Aerosols von der wässrigen Lösung.

### Beispiel

Ein beispielhaftes Verfahren kann folgendermaßen ablaufen.

Um die Effektivität des Entfernens von fluorhaltigen Tensiden zu demonstrieren, umfasst das Verfahren die folgenden Schritte: 1) Vorbereitung/Spülen der Glasapparatur; 2) Einfüllen der Lösung in die Glasapparatur; 3) Durchführung der Versuchs mit Probennahmen und 4) Verwerfen der Lösung und Spülen der Glasapparatur, wobei die einzelnen Schritte im Folgenden im Detail beschrieben werden.

Mit Bezug auf Schritt 1) wird vor dem Versuch die verwendete Glasapparatur gründlich mit Methanol/Reinstwasser sowie nur Reinstwasser gespült, indem die entsprechende Lösung - ohne dass ein Gasanschluss unten an einer Fritte angeschlossen ist - in die Glasapparatur gefüllt wird. Ohne den Gegendruck des Gases von unten läuft die Lösung somit durch die Fritte. Sobald die gesamte Spüllösung durch die Glasapparatur gelaufen ist und diese an der Glasolive der Fritte unten getrocknet wurde, wird der Gasanschluss unten an der Olive befestigt und ein Fluss aus Stickstoff-Gas eingestellt. Dann wird zunächst Reinstwasser als weiterer Spülschritt in die Fritte gegeben. Mit eingeschaltetem Gasfluss und Reinstwasser in der Apparatur wird weitere 5 Minuten gespült. Diese Spüllösung wird dann - bei eingeschaltetem Gasfluss - entfernt. Mit Hilfe eines fusselfreien Tuchs, beispielsweise, kann der Innenraum der Glasapparatur getrocknet werden. Eine gewisse Restmenge an Reinstwasser kann jedoch in den Glasfritten enthalten bleiben, da dies nicht zu einer Verfälschung des Ergebnisses bzw. der ermittelten Konzentration führt, wie unter 2) erklärt ist.

Mit Bezug auf Schritt 2) wird die zuvor vorbereitete Lösung mit 6:2 FTS oder einem anderen Tensid (Volumen: 100 ml) bei eingestelltem Gasfluss in die Apparatur gefüllt. Zur Vorbereitung der Lösung zählt nur - bei synthetischen Wässern - das Zusammenpipettieren der einzelnen Lösungen (Tensid, ggf. Hilfsstoffe und Reinstwasser) sowie gutes Durchmischen mit Hilfe eines Rührfisches. Der Rührfisch ist vorzugsweise glasummantelt zur Vermeidung von Kontaminationen beziehungsweise Adsorptionseffekten: ein PTFE-Rührfisch kann Rückstände von perfluorierten Tensiden (PFOA) enthalten, per- und polyfluorierte Tenside können ferner an PTFE adsorbieren. Untersuchte Abwässer/Spül/Prozesswässer werden nur gründlich durchmischt.

Nach Einfüllen der Lösung wird unmittelbar eine Probe genommen als Referenz zum Zeitpunkt t₀ und die Behandlungsdauer startet. Das sich noch in der Apparatur befindende, restliche Reinstwasser vom Spülen führt nur zu einer geringen Verdünnung der Lösung und nicht zu einer fehlerhaften Referenz, da nicht die Konzentration der zuvor angesetzten Lösung, sondern die Konzentration der Lösung zum Zeitpunkt t₀ als Referenz genommen wird. Die Probennahme erfolgt möglichst reproduzierbar in der Mitte der runden Glasapparatur, ca. 2 cm unterhalb der Wasseroberfläche (Volumenentnahme: 1 ml). Danach wird sofort der Gasfluss mit Hilfe des Flow-Controllers auf den gewünschten Wert eingestellt.

Mit Bezug auf Schritt 3) folgen in den gewünschten Zeitabständen weitere Probennahmen wie oben beschrieben. Falls es zu einer geringen Änderung des Gasflusses kommt, kann dieser nachreguliert werden.

Mit Bezug auf Schritt 4) wird nach der gewünschten Behandlungsdauer (z.B. 60 Minuten) eine letzte Probe genommen und die Lösung wird danach bei eingeschaltetem Gasfluss entfernt. Danach wird die Glasapparatur mehrmals mit Reinstwasser sowie Methanol/Reinstwasser gespült, wie unter 1) beschrieben.

In den folgenden Figuren 1 bis 4 sind Ergebnisse gezeigt, die mit einem vorbeschriebenen Verfahren erzeugt werden konnten. Dabei wird jeweils der Austrag von fluorhaltigen Tensiden gezeigt, wobei auf der x-Achse die Zeit in Minuten (t [min]) und auf der y-Achse die Konzentration in mg/L (c [mg/L]) aufgetragen ist. Es wurde Stickstoff durch eine scheibenförmige Glasfritte mit einem Durchmesser von 5cm und mit einer Porengröße von 10-100µm eingetragen, um an der Oberfläche der wässrigen Lösung ein Aerosol zu erzeugen. Dabei konnten Gasblasen mit einem Durchmesser in einem Bereich von 2mm oder darunter erzeugt werden, wobei eine geringe Größe der Gasblasen sich vorteilhaft ausüben kann.

In der Figur 1 ist dabei der Austrag von 6:2FTS aus einer wässrigen Lösung gezeigt, die Natriumsulfat (Na₂SO₄) in einer Konzentration von 28g/L enthält, wobei Glasfritten mit verschiedenen Porengrößen verwendet werden. Das Viereck (◆) bezeichnet dabei eine Glasfritte mit einer Porengröße in einem Bereich von 40-100 µm, der Kreis (○) bezeichnet ferner eine Glasfritte mit einer Porengröße in einem Bereich von 16-40 µm und das x (x) bezeichnet ferner eine Glasfritte mit einer Poren größe in einem Bereich von 10-16µm. Ferner wurde ein Gasfluss von ca. 100mL/min eingestellt. Dabei ist zu erkennen, dass bei sämtlichen Versuchen bereits nach kurzer Zeit die Konzentration des Tensids im Bereich von null beziehungsweise unterhalb der Nachweisgrenze liegt, wobei die kleinste Porengröße am effektivsten ist.

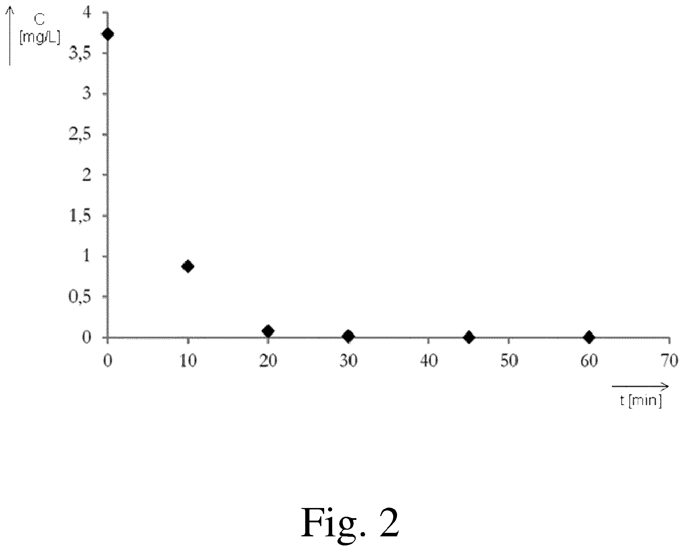

In der Figur 2 ist ferner der Austrag von 6:2FTS aus einem industriellen Abwasser, welches gesammelte chromathaltige Abwässer aufweist, gezeigt, welches aus einem galvanischen Prozess stammt und nicht vorbehandelt wurde. Dieses Abwasser enthält hauptsächlich Chrom (IV)-Verunreinigungen. Es wurde ein Gasfluss von ca. 60mL/min eingestellt, wobei ferner eine Glasfritte mit einer Porengröße in einem Bereich von 16-40 µm verwendet wurde. Auch hier ist zu erkennen, dass bereits nach kurzer Zeit die Konzentration des Tensids im Bereich von null beziehungsweise unterhalb der Nachweisgrenze liegt.

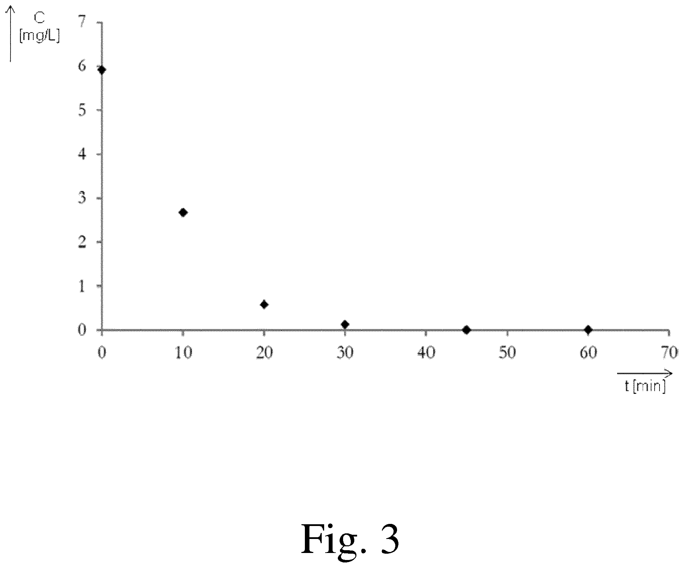

In der Figur 3 ist ferner der Austrag von 6:2FTS aus einem weiteren industriellen Abwasser gezeigt, welches aus einem galvanischen Prozess stammt und nicht vorbehandelt wurde. Im Detail umfasst dieses Abwasser die Bestandteile nach einer Chromreduktion beziehungsweise Entgiftung, bei welcher Chrom von der Oxidationsstufe VI (Cr(VI)) zu der Oxidationsstufe III (Cr(III)) reduziert wurde. Dieses Abwasser enthält hauptsächlich Chrom (III)-Verunreinigungen. Es wurde ein Gasfluss von ca. 60mL/min eingestellt, wobei ferner eine Glasfritte mit einer Porengröße in einem Bereich von 16-40 µm verwendet wurde. Auch hier ist zu erkennen, dass bereits nach kurzer Zeit die Konzentration des Tensids im Bereich von null beziehungsweise unterhalb der Nachweisgrenze liegt.

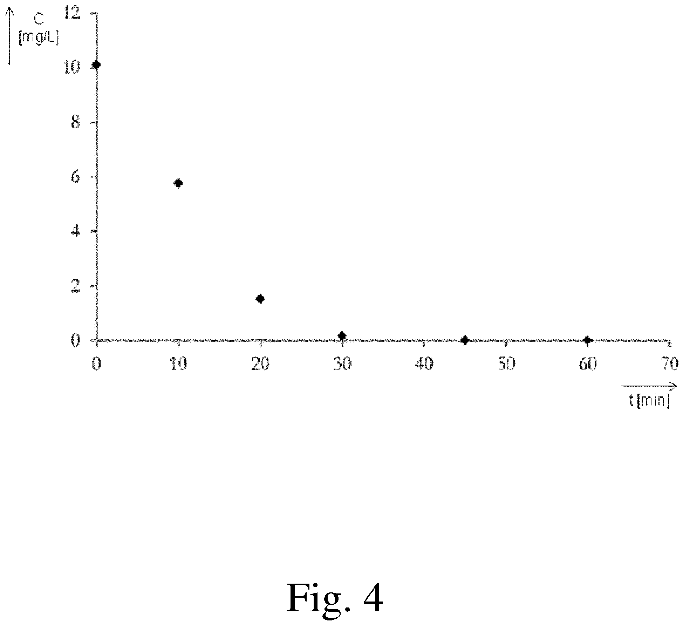

In der Figur 4 ist ferner der Austrag von 6:2FTS aus einem weiteren industriellen Abwasser gezeigt, welches aus einem galvanischen Prozess stammt und nicht vorbehandelt wurde, und welches direkt oder indirekt der Entsorgung zugeführt wird. Dieses Abwasser enthält keine Schwermetalle, jedoch andere Ionen, wie beispielsweise Sulfat, Bisulfit, Natrium, gegebenenfalls Chlorid und sonstige Chemikalien, die aus der industriellen Abwasseraufbereitung stammen können, wie etwa Flockungshilfsmittel. Es wurde ein Gasfluss von ca. 60mL/min eingestellt, wobei ferner eine Glasfritte mit einer Porengröße in einem Bereich von 16-40 µm verwendet wurde. Auch hier ist zu erkennen, dass bereits nach kurzer Zeit die Konzentration des Tensids im Bereich von null beziehungsweise unterhalb der Nachweisgrenze liegt.

## Patentansprüche

1. Gewerbewasseraufbereitungsverfahren, aufweisend die Verfahrensschritte:
a) Bereitstellen des Gewerbewassers mit wenigstens einem fluorhaltigen Tensid, wobei das fluorhaltige Tensid eine Konzentration aufweist, die unterhalb einer Schaumbildungskonzentration liegt;
b) Erzeugen von Gasblasen in dem Gewerbewasser unter Ausbildung eines Aerosols an der Oberfläche des Gewerbewassers; und
c) Abtrennen des Aerosols von dem Gewerbewasser.

2. Verfahren nach Anspruch 1, **dadurch gekennzeichnet, dass** Verfahrensschritt b) realisiert wird durch wenigstens eins von dem Einleiten eines Gases in das Gewerbewasser und dem Erzeugen eines Gases in dem Gewerbewasser und dem Verwenden eines Gewerbewassers, das mit dem Gas zumindest temporär übersättigt ist.

3. Verfahren nach Anspruch 2, **dadurch gekennzeichnet, dass** das Einleiten eines Gases in das Gewerbewasser realisiert wird unter Verwendung einer Fritte.

4. Verfahren nach Anspruch 2 oder 3, **dadurch gekennzeichnet, dass** das Einleiten eines Gases in das Gewerbewasser realisiert wird unter Verwendung einer Düse.

5. Verfahren nach einem der Ansprüche 2 bis 4, **dadurch gekennzeichnet, dass** das Erzeugen eines Gases in dem Gewerbewasser realisiert wird durch eine chemische Reaktion, insbesondere durch eine Elektrolyse.

6. Verfahren nach einem der Ansprüche 2 bis 5, **dadurch gekennzeichnet, dass** das Erzeugen eines Gases in dem Gewerbewasser realisiert wird durch das Anwenden von Ultraschall.

7. Verfahren nach einem der Ansprüche 2 bis 6, **dadurch gekennzeichnet, dass** das Erzeugen eines Gases in dem Gewerbewasser realisiert wird durch das Anwenden eines statischen Mischers.

8. Verfahren nach einem der Ansprüche 1 bis 7, **dadurch gekennzeichnet, dass** ein bezüglich des fluorhaltigen Tensids angereicherte Aerosol aufgefangen wird.

9. Verfahren nach einem der Ansprüche 1 bis 8 **dadurch gekennzeichnet, dass** das Gewerbewasser aufweisend ein fluorhaltiges Tensid ein Prozesswasser oder ein Abwasser eines galvanischen Prozesses ist.

10. Verfahren nach einem der Ansprüche 1 bis 9, **dadurch gekennzeichnet, dass** das Gewerbewasser aufweisend ein fluorhaltiges Tensid ein Löschwasser oder ein Grundwasser ist.

11. Verfahren nach einem der Ansprüche 1 bis 10, **dadurch gekennzeichnet, dass** das Gewerbewasser ein durch ein Extraktionsverfahren mit einem fluorhaltigen Tensid angereichertes Extraktionsmittel ist.

12. Verfahren nach einem der Ansprüche 1 bis 11, **dadurch gekennzeichnet, dass** zumindest der Verfahrensschritt b) mehrfach erfolgt.

13. Verfahren nach einem der Ansprüche 1 bis 12, **dadurch gekennzeichnet, dass** das Gewerbewasser einen Entschäumer aufweist.

## Claims

1. Method for treating commercial water, comprising the steps:
a) providing the commercial water with at least one fluorine-containing surfactant, wherein the fluorine-containing surfactant has a concentration below a foaming concentration;
b) generating gas bubbles in the commercial water while forming an aerosol at the surface of the commercial water; and
c) separating the aerosol from the commercial water.

2. Method according to claim 1, **characterized in that** step b) is realized by at least one of introducing a gas into the commercial water, generating a gas in the commercial water and using a commercial water that is at least temporarily supersaturated with the gas.

3. Method according to claim 2, **characterized in that** the introduction of a gas into the commercial water is realized by use of a frit.

4. Method according to claim 2 or 3, **characterized in that** the introduction of a gas into the commercial water is realized by use of a nozzle.

5. Method according to any one of claims 2 to 4, **characterized in that** the generation of a gas in the commercial water is realized by a chemical reaction, in particular by electrolysis.

6. Method according to any one of claims 2 to 5, **characterized in that** the generation of a gas in the commercial water is realized by the application of ultrasonic sound.

7. Method according to any one of claims 2 to 6, **characterized in that** the generation of a gas in the commercial water is realized by the application of a static mixer.

8. Method according to any one of claims 1 to 7, **characterized in that** an aerosol enriched with respect to the fluorine-containing surfactant is collected.

9. Method according to any one of claims 1 to 8, **characterized in that** the commercial water comprising a fluorine-containing surfactant is a process water or a waste water of a galvanic process.

10. Method according to any one of claims 1 to 9, **characterized in that** the commercial water comprising a fluorine-containing surfactant is a fire-extinguishing water or a ground water.

11. Method according to any one of claims 1 to 10, **characterized in that** the commercial water is an extraction agent enriched by an extraction process with a fluorine-containing surfactant.

12. Method according to any one of claims 1 to 11, **characterized in that** at least process step b) is conducted several times.

13. Method according to any one of claims 1 to 12, **characterized in that** the commercial water comprises a defoamer.

## Revendications

1. Procédé de traitement d'eaux industrielles présentant les étapes de procédé :
a) de préparation des eaux industrielles avec au moins un tensioactif contenant du fluor, le tensioactif contenant du fluor présentant une concentration qui se situe en-dessous de la concentration de formation d'une mousse ;
b) de génération de bulles de gaz dans les eaux industrielle moyennant la formation d'un aérosol à la surface des eaux industrielles ; et
c) de séparation de l'aérosol des eaux industrielles.

2. Procédé selon la revendication 1, **caractérisé en ce que** l'étape de procédé b) est réalisée par au moins une action parmi l'introduction d'un gaz dans les eaux industrielles et la génération d'un gaz dans les eaux industrielles et l'utilisation d'eaux industrielles qui sont saturées au moins temporairement avec le gaz.

3. Procédé selon la revendication 2, **caractérisé en ce que** l'introduction d'un gaz dans les eaux industrielles est réalisée moyennant l'emploi d'une plaque de verre fritté.

4. Procédé selon la revendication 2 ou la revendication 3, **caractérisé en ce que** l'introduction d'un gaz dans les eaux industrielles est réalisée moyennant l'emploi d'une buse.

5. Procédé selon l'une des revendications 2 à 4, **caractérisé en ce que** la génération d'un gaz dans les eaux industrielles est réalisée par une réaction chimique, en particulier, par une électrolyse.

6. Procédé selon l'une des revendications 2 à 5, **caractérisé en ce que** la génération d'un gaz dans les eaux industrielles est réalisée par l'utilisation d'ultrasons.

7. Procédé selon l'une des revendications 2 à 6, **caractérisé en ce que** la génération d'un gaz dans les eaux industrielles est réalisée par l'utilisation d'un mélangeur statique.

8. Procédé selon l'une des revendications 1 à 7, **caractérisé en ce qu'**un aérosol enrichi en ce qui concerne le tensioactif contenant du fluor est capturé.

9. Procédé selon l'une des revendications 1 à 8, **caractérisé en ce que** les eaux industrielles présentant un tensioactif contenant du fluor sont des eaux de procédé ou des eaux usées d'un procédé galvanique.

10. Procédé selon l'une des revendications 1 à 9, **caractérisé en ce que** les eaux industrielles présentant un tensioactif contenant du fluor sont des eaux d'extinction ou des eaux souterraines.

11. Procédé selon l'une des revendications 1 à 10, **caractérisé en ce que** les eaux industrielles sont un moyen d'extraction enrichi avec un tensioactif contenant du fluor par un procédé d'extraction.

12. Procédé selon l'une des revendications 1 à 11, **caractérisé en ce qu'**au moins l'étape de procédé b) se produit plusieurs fois.

13. Procédé selon l'une des revendications 1 à 12, **caractérisé en ce que** les eaux industrielles présentent un agent démoussant.
